(19) 

**Europäisches Patentamt**

**European Patent Office**

**Office européen des brevets**

(11) **EP 4 678 688 A1**

(12) **EUROPEAN PATENT APPLICATION**

(43) Date of publication:
14.01.2026 Bulletin 2026/03

(21) Application number: 24188397.4

(22) Date of filing: 12.07.2024

(51) International Patent Classification (IPC):
*C08J 9/00* (2006.01)  *C08J 9/12* (2006.01)

(52) Cooperative Patent Classification (CPC):
**C08J 9/0061;** C08J 9/12; C08J 2201/03;
C08J 2203/14; C08J 2323/06; C08J 2423/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Armacell Enterprise GmbH & Co. KG
12529 Schönefeld OT Waltersdorf (DE)**

(72) Inventors:
• **TROJANOWSKA-TOMCZAK, Monika
12529 Schönefeld OT Waltersdorf (DE)**
• **GEISS, Daniel
12529 Schönefeld OT Waltersdorf (DE)**
• **MALEWSKI, Lukasz
12529 Schönefeld OT Waltersdorf (PL)**

(74) Representative: **Vossius & Partner
Patentanwälte Rechtsanwälte mbB
Siebertstrasse 3
81675 München (DE)**

(54) **POLYOLEFIN FOAM CONTAINING LOW-DENSITY POLYETHYLENE AND HIGH-DENSITY POLYETHYLENE**

(57) The present invention relates to a foam obtainable by foaming a composition comprising Mixture M consisting of Polymer A and Polymer 8, wherein the content of Mixture M, relative to the total weight of polymers in the composition, is at least 80 wt.-%, and wherein Polymer A is present in Mixture M at 62.5 to 92.9% by weight, relative to the total weight of Mixture M, as well as to a process of preparation of such a foam. The present invention furthermore relates to a thermal insulation tube, rod, profile, or sheet comprising the foam according or the foam obtained by the process.

**EP 4 678 688 A1**

**Description**

The present invention relates to a foam obtainable by foaming a composition comprising Mixture M consisting of Polymer A and Polymer B, wherein the content of Mixture M, relative to the total weight of polymers in the composition, is at least 80% by weight, wherein

Polymer A is polyethylene with a density of 925 to 935 kg/m$^3$ and/or a melting point of 110°C or more, and Polymer B is polyethylene with a density in the range of from 940 to 980 kg/m$^3$ which furthermore has (a) a number average molecular weight in the range of from 30000 Da and 35000 Da, and/or (b) a polydispersity in the range of from 8 and 10, wherein Polymer A is present in Mixture M at 62.5 to 92.9% by weight, relative to the total weight of Mixture M.

The present invention also relates to a process of preparation of such a foam. The present invention furthermore relates to a thermal insulation tube, rod, profile, or sheet comprising the foam.

With the growing interest in renewable energy sources, the demand for heat pumps is also increasing. The new generations of high-performance pumps operate with the heat source temperature ranging up to 110 °C, generating an output temperature of the heat pump in the range of 100 to 150 °C. Insulation dedicated for this application requires therefore higher temperature resistance. Polyethylene foam with its maximal service temperature of about 100 °C does not meet requirements of this new application.

In the air conditioning sector, refrigerants with low Global Warming Potential (GWP) will replace in the future those with high GWP. The R32 refrigerant (difluoromethane) is going to replace R410A (zeotropic mixture of difluoromethane and pentafluoroethane). The discharge temperature of R32 is 106°C while the discharge temperature of R410 A is 23°C lower. This is another example showing that typical low density polyethylene foam will not be suitable as an insulation for air conditioning application.

Most of polyethylene grades and ethylene copolymers have melting point below 120°C and therefore cannot be used for the above-mentioned application for a similar reason. An exception is high density polyethylene with melting point usually between 120 to 140 °C. However, high density polyethylene does not exhibit melt strength due to the lack of long chain branching and it is poorly suitable for foaming. Foam which contains high density polyethylene is characterized by a large number of open cells or it collapses immediately after the head of the extruder.

So far elastomeric foams are preferable as insulation materials when heat resistance is required. Nevertheless, ethylene propylene diene monomer rubber (EPDM) or nitrile rubber is not recyclable and does not exhibit good resistance to UV radiation.

EP 3 500 620 relates to polymeric foams with improved resistance to temperature. It describes polyolefin foam comprising 40.9 to 99.9% by weight of at least one HDPE polymer. Foams described in therein must be extremely stiff due to the nature of HDPE (high content of crystalline phase). Such products might be not appreciated by customers expecting flexible and soft elastomeric foams. The solution described in EP 3 500 620 requires the use of ionomers, i.e. ionically crosslinked thermoplastic copolymers, preferably copolymers of ethylene and methacrylic acid. It introduces an additional ingredient into the formulation that increases the price of the product and might have a negative impact on fire resistance.

EP 2 164 893 B1 relates to a foam based on a blend comprising 97.0% by weight to 99.5% by weight low density polyethylene and 0.5% by weight to 3.0% by weight high density polyethylene. HDPE and LDPE are blended during granulation after LDPE production. Blending of HDPE and LDPE before foaming is an additional step during processing which generates higher complexity and cost. However, this patent does not mention maximum service temperature as a newly obtained feature.

The objective of the present invention is thus the provision of a foam which is preferably closed cell and has a high temperature resistance as well as excellent thermal insulation properties while being flexible and having good fire resistance, preferably at low cost.

This objective can be achieved by the foam of the present invention which provides a closed cell foam with improved temperature resistance, typically up to 120 °C. The present inventors surprisingly found that this can be achieved by including a relatively small amount of HDPE (high density polyethylene) in a foam containing mostly (50% or more) of LDPE (low density polyethylene).

Thus, an object of the present invention is foam obtainable by foaming a composition comprising Mixture M consisting of Polymer A and Polymer B, wherein the content of Mixture M, relative to the total weight of polymers in the composition, is at least 80 wt.-%, and wherein

Polymer A is polyethylene with a density of 925 to 935 kg/m$^3$ and/or a melting point of 110°C or more, and Polymer B is polyethylene with a density in the range of from 940 to 980 kg/m$^3$ which furthermore has a number average molecular weight in the range of from 30000 Da and 35000 Da, and/or a polydispersity in the range of from 8 and 10,

wherein Polymer A is present in Mixture M at 62.5 to 92.9% by weight, relative to the total weight of Mixture M.

In other words, an object of the present invention is a foam obtainable by foaming a composition comprising polymers and optionally one or more additives,
wherein the polymers comprise, relative to the total weight of polymers in the composition:

(a) at least 80% by weight of a Mixture M consisting of Polymer A and Polymer B, wherein Polymer A is polyethylene with a density of 925 to 935 kg/m$^3$ and/or a melting point of 110°C or more, and

Polymer B is polyethylene with a density in the range of from 940 to 980 kg/m$^3$ which furthermore has a number average molecular weight in the range of from 30000 Da and 35000 Da, and/or a polydispersity in the range of from 8 and 10, and
Polymer A is present in Mixture M at 62.5 to 92.9% by weight relative to the total weight of Mixture M,

(b) 20% by weight or less other polymers.

Still in other words, an object of the present invention is a foam comprising Mixture M consisting of Polymer A and Polymer B, wherein the content of Mixture M, relative to the total weight of polymers in the foam, is at least 80 wt.-%, and wherein

Polymer A is polyethylene with a density of 925 to 935 kg/m$^3$ and/or a melting point of 110°C or more, and
Polymer B is polyethylene with a density in the range of from 940 to 980 kg/m$^3$ which furthermore has a number average molecular weight in the range of from 30000 Da and 35000 Da, and/or a polydispersity in the range of from 8 and 10,
wherein Polymer A is present in Mixture M at 62.5 to 92.9% by weight, relative to the total weight of Mixture M.

In these words, the amounts specified herein as being relative to the total weight of the composition are to be understood as being relative to the total weight of the foam.
Yet in other words, an object of the present invention is a foam comprising polymers and optionally one or more additives,
wherein the polymers comprise, relative to the total weight of polymers in the foam:

(a) at least 80% by weight of a Mixture M consisting of Polymer A and Polymer B, wherein Polymer A is polyethylene with a density of 925 to 935 kg/m$^3$ and/or a melting point of 110°C or more, and

Polymer B is polyethylene with a density in the range of from 940 to 980 kg/m$^3$ which furthermore has a number average molecular weight in the range of from 30000 Da and 35000 Da, and/or a polydispersity in the range of from 8 and 10, and
Polymer A is present in Mixture M at 62.5 to 92.9% by weight relative to the total weight of Mixture M,

(b) 20% by weight or less other polymers.

In these words, the amounts specified herein as being relative to the total weight of the composition are to be understood as being relative to the total weight of the foam.
Furthermore, disclosed herein is a foam obtainable by foaming a composition comprising Mixture M consisting of Polymer A and Polymer B, wherein the content of Mixture M, relative to the total weight of polymers in the composition, is at least 80 wt.-%, and wherein

Polymer A is polyethylene with a density of 925 to 935 kg/m$^3$ and/or a melting point of 110°C or more, and
Polymer B is polyethylene with a density in the range of from 940 to 980 kg/m$^3$ which preferably furthermore has a number average molecular weight in the range of from 30000 Da and 35000 Da, and/or a polydispersity in the range of from 8 and 10,
wherein Polymer A is present in Mixture M at 62.5 to 92.9% by weight, relative to the total weight of Mixture M.

The foam

The foam is obtainable by foaming a composition comprising Mixture M consisting of Polymer A and Polymer B, wherein the content of Mixture M, relative to the total weight of polymers in the composition, is at least 80 wt.-%, and wherein

Polymer A is polyethylene with a density of 925 to 935 kg/m3 and/or a melting point of 110°C or more, and
Polymer B is polyethylene with a density in the range of from 940 to 980 kg/m3 which furthermore has a number average molecular weight in the range of from 30000 Da and 35000 Da, and/or a polydispersity in the range of from 8 and 10,
wherein Polymer A is present in Mixture M at 62.5 to 92.9% by weight, relative to the total weight of Mixture M.

Thus, the polymers in the foam (or, in other words, the polymers in the composition from which the foam is obtained) of the present invention contain not more than 20% by weight of polymers other than Polymer A and Polymer B, based on the total weight of all polymers in the foam. Preferably, the polymers other than Polymer A and Polymer B in the foam do not amount to more than 15% by weight, more than 10% by weight, more than 8% by weight, more than 7% by weight, or even not more than 6% by weight.

It is to be understood that the "other polymers" (which are also referred to herein as "polymers C") are optional and do not have to be present. Thus, in other words, the amount of the polymers other than Polymer A and Polymer B may be 2% by weight or less, 1% by weight or less, 0.5% by weight or even 0% by weight, relative to the total weight of polymers in the composition.

The amount of Polymer A, relative to the total weight of Mixture M, is in the range of from 62.5 % to 92.9 % by weight, typically in the range of from 72.5 % to 92.9 % by weight. If low density polyethylene is contained within this range, the stability of the foam may be improved. The amount of Polymer A, relative to the total weight of Mixture M, is preferably in the range of from 82.5 to 92.9 % by weight, more preferably in the range of from 84 to 92 % by weight. For example, the amount of Polymer A, relative to the total weight of Mixture M, may be about 84 % by weight, about 85 % by weight, about 86 % by weight, about 87 % by weight, about 88% by weight, about 89 % by weight, about 90 % by weight, about 91 % by weight, or about 92 % by weight.

The amount of Polymer B, relative to the total weight of Mixture M, is in the range of from 7.1 % to 37.5 % by weight, typically in the range of from 7.1 % to 27.5 % by weight. If high density polyethylene is contained within this range, excellent heat resistance can be achieved. The amount of Polymer B, relative to the total weight of Mixture M, is preferably in the range of from 7.1 to 17.5 % by weight, even more preferably in the range of from 7.1 to 10.5 % by weight. Less than 7.1 % high density polyethylene does not bring stabilizing effect during exposure to high temperature. If the content of Polymer B, relative to the total weight of Mixture M, is higher than 37.5%, the foam often collapses or has a very high content of open cells due to lack of strain hardening.

In the foam of the present invention, the total content of Polymer A and Polymer B, relative to the total weight of Mixture M, is preferably at least 83% by weight, more preferably at least 85% by weight, even more preferably at least 90% by weight, or even at least 92, 94, 95 or even preferably at least 96% by weight.

The total amount of polymers (i.e. Polymer A, Polymer B and the other polymers) is not particularly limited as the foam having the desired properties may be obtained due to the use of Mixture M even in the presence of high amounts of additives. However, the foam typically contains at least 10% by weight, such as at least 30% by weight, at least 50% by weight, at least 60% by weight, at least 70% by weight, or at least 80% by weight, preferably 80 to 99.9% by weight, more preferably 85 to 99.5% by weight, even more preferably 90 to 99.3% by weight, still more preferably 94% to 98% by weight of polymers, relative to the total weight of the foam.

In order to obtain a foam with optimal properties, it is preferred that most of the cells be closed cells. Thus, the content of open cells is typically less than 30%, preferably less than 25%, more preferably less than 20%, 15% or even less than 10%, based on all cells in the foam. On the other hand, the content of closed cells is typically at least 70%, preferably at least 75%, 78%, 80%, 83%, 85%, 88% or even at least 90%, based on all cells in the foam. In other words, the ratio of closed cells to open cells is typically at least 2.3, preferably at least 3, more preferably at least 5, 6, 7, 8, 9, 10, 11, 12, 13, 14, 15, 16, 17, 18, 19 or even 20.

The foam of the present invention is preferably physically foamed. In other words, the foaming process preferably involves the addition of a blowing agent which is gaseous at 25°C, 1 atm. Preferably, the foam is obtained using one or more blowing agents selected from isobutane, $CO_2$, n-butane, pentane, nitrogen, and/or hydrofluorocarbons. The foam is more preferably obtained using isobutane as a blowing agent.

The blowing agent is typically used in an amount in the range of from 5 to 16% by weight, preferably in the range of from 8 to 14% by weight, relative to the total weight of the other components of the composition to be foamed.

The extrusion process for the production of the foam of the present invention is not particularly limited. However, the foam is preferably continuously extruded. The blowing agent is typically added to the components of the material to be foamed during extrusion, i.e. at the extruder.

Common processes of polyethylene foaming are described in "Handbook of Industrial Polyethylene and Technology: Definitive Guide to Manufacturing, Properties, Processing, Applications and Markets" by Mark Spalding, Ananda Chatterjee, 2017, Scrivener Publishing LLC and in many other books or publications, e.g.: "Thermoplastic Foam Processing, Principles and Development", R. Gedron, 2005, CRC Press, "Extrusion - the Definitive Processing Guide and Handbook", Harold F. Giles, John R. Wagner, Eldridge M. Mount, 2005, William Andrew Publishing.

It is known from the literature ("Foam Extrusion - Principles and Properties, edited by S.T. Lee, 2000, CRC Press) that both single-screw and twin-screw extruders are used to make foamed products. The temperature in extruder's zones before gas injection port must be high enough in order to melt and mix well foam components. When gas is dissolved into the polymer system, it can act as a plasticizer. The viscosity of the melt typically drops, as does its softening point. The skilled person is aware that the melt should therefore be cooled to raise its viscosity in preparation to be formed through a die. If the melt is too warm, nucleation and bubble growth in the die can disrupt the process and the bubbles will be too large. If too cool, nucleation and bubble growth will occur too late, or bubbles may not grow or grow fully. In order to increase the viscosity in the melt and to ensure the nucleation and fine bubble growth, the temperature in the polymer melt in the extruder or/and melt cooler is reduced to just above the polyethylene crystallization temperature. The optimal temperature profile in extruder and/or meltcooler depends on polyethylene type and properties of other additives.

The foam of the present invention has increased temperature resistance while remaining thermal insulation properties. Thus, the foam preferably has a maximum service temperature higher than 90 °C, preferably higher than 100 °C, more preferably higher than 115 °C, even more preferably higher than 117°C or even higher than 120 °C, as measured according to EN 14707. It is desired that the foam preferably has a lambda ($\lambda$) value below 0.050 W/m·K at 40°C, preferably below 0.045 W/m·K, more preferably below 0.035 W/m·K, even more preferably below 0.034, below 0.033, below 0.032, below 0.031 or even below 0.030 W/m·K, as measured according to DIN EN ISO 8497.

The foam of the present invention preferably has a density between 17 and 40 kg/m$^3$, even more preferably between 25 and 30 kg/m$^3$.

The foam contains the Polymer A and Polymer B and preferably a nucleating agent and a cell stabilizer.

The foam of the present invention does not require any additional components to exhibit improved heat resistance and a high content of closed cells.

Polymer A

Polymer A is polyethylene with a density of 925 to 935 kg/m$^3$ and/or a melting point of 110°C or more. Preferably, Polymer A is low-density polyethylene having a density in the range of from 925 to 935 kg/m$^3$.

Typically at least 99.8 wt.-%, preferably at least 99.9 wt.-%, more preferably 99.95 wt.-%, even more preferably 99.99 wt.-%, of the repeating units in Polymer A are repeating units derived from ethylene.

The amounts of repeating units may also be expressed as typically at least 99.8 mol-%, preferably at least 99.9 mol-%, more preferably 99.95 mol-%, even more preferably 99.99 mol-%, of the repeating units in Polymer A being repeating units derived from ethylene.

In other words, Polymer A is typically obtainable by polymerizing a monomer mixture comprising at least 99.8 wt.-%, preferably at least 99.9 wt.-%, more preferably 99.95 wt.-%, even more preferably 99.99 wt.-%, ethylene.

Polymer A in the foam of the present invention preferably fulfills one or more or all of the following requirements (i) to (iv):

(i) a density in the range of from 925 to 930 kg/m$^3$;
(ii) a melt flow index, measured at 190°C with a load of 2.16 kg, in the range of from 0.1 g/10 min to 22 g/10 min, preferably in the range of from 0.25 to 4 g/10 min, more preferably in the range of from 0.50 to 0.80 g/10 min, even more preferably in the range of from 0.60 to 0.70 g/10 min;
(iii) a melting temperature in the range of from 110°C to 115°C, preferably in the range of from 110°C to 114°C, more preferably in the range of from 112°C to 114°C;
(iv) a crystallization temperature in the range of from 96°C to 104 °C, preferably in the range of from 99°C to 104°C, more preferably in the range of from 102°C to 104°C.

More preferably at least requirements (i) and (ii), or (i) and (iii), or (i) and (iv), or (ii) and (iii), or (ii) and (iv), or (iii) and (iv) are fulfilled. Even more preferably at least requirements (i), (ii) and (iii), or (i), (ii) and (iv), or (i), (iii) and (iv), or (ii), (iii) and (iv) are fulfilled.

Thus, it is preferred that Polymer A has a density in the range of from 925 to 930 kg/m$^3$, a melt flow index, measured at 190°C with a load of 2.16 kg, in the range of from 0.1 g/10 min to 22 g/10 min, a melting temperature in the range of from 110°C to 115°C, and a crystallization temperature in the range of from 96°C to 104 °C.

More preferably, the Polymer A has a density in the range of from 925 to 928 kg/m$^3$, a melt flow index, measured at 190°C with a load of 2.16 kg, in the range of from 0.25 to 4 g/10 min, a melting temperature in the range of from 110°C to 114°C, and a crystallization temperature in the range of from 99°C to 104°C.

Even more preferably, Polymer A has a density in the range of from 925 to 927 kg/m$^3$, a melt flow index, measured at 190°C with a load of 2.16 kg, more preferably in the range of from 0.50 to 0.80 g/10 min, a melting temperature in the range of from 112°C to 114°C, and a crystallization temperature in the range of from 102°C to 104°C.

A foam comprising Polymers A and B with low content of open cells, improved thermal resistance and stable production parameters can be achieved even more reliably by selecting Polymer A as defined above.

A particularly low content of open cells and a stable pressure in extruder can be achieved by using Polymer A with a density (measured acc. to ISO 845:2006) of from 925 to 930 kg/m$^3$, more preferably between 925 and 928 kg/m$^3$, more particularly preferably 926 kg/m$^3$; a MFI (measured at 190°C with a load of 2.16 kg, acc. to ISO 1133-1) of between 0.1 g/10 min and 22 g/10 min, preferably of 0.25 to 4 g/ 10 min, more preferably 0.65 g/10 min; a melting temperature (measured by DSC acc. to ISO 11357:2016, part 3) of from 110°C to 115°C, preferably of from 110°C to 114 °C; crystallization temperature (measured by DSC acc. to ISO 11357:2016, part 3) of from 96°C to 104°C, preferably of 100°C to 104°C, preferably of 102°C to 104°C; and a melt strength with a maximum force between 0.05 and 0.09 N, preferably of 0.08 and 0.09 N.

Preferred Polymer A for use in the present invention can for example be obtained by a tubular process or by an autoclave process.

Polymer B

Polymer B is polyethylene with a density in the range of from 940 to 980 kg/m$^3$. In addition, Polymer B furthermore has a number average molecular weight in the range of from 30000 Da and 35000 Da, and/or a polydispersity in the range of from 8 and 10. Preferably, Polymer B is high-density polyethylene with a density in the range of from 940 to 980 kg/m$^3$.

Typically at least 99 wt.-%, preferably at least 99.3 wt.-%, more preferably 99.6 wt.-%, even more preferably 99.8 wt.-%, of the repeating units in Polymer B are repeating units derived from ethylene.

The amounts of repeating units may also be expressed as typically at least 99 mol-%, preferably at least 99.3 mol-%, more preferably 99.6 mol-%, even more preferably 99.8 mol-%, of the repeating units in Polymer B being repeating units derived from ethylene.

In other words, Polymer B is typically obtainable by polymerizing a monomer mixture comprising at least 99 wt.-%, preferably at least 99.3 wt.-%, more preferably 99.6 wt.-%, even more preferably 99.8 wt.-%, ethylene.

Polymer B used in the present invention preferably fulfills one or more, preferably all, of the following requirements (i) to (iv):

(i) a weight average molecular weight in the range of from 270000 Da to 325000 Da; preferably from 285000 to 300000.
(ii) a number average molecular weight in the range of from 30000 Da and 35000 Da; preferably 31500 to 33500.
(iii) a polydispersity in the range of from 8 and 10, preferably 9.
(iv) a melt flow index, measured at 190°C with a load of 2.16 kg, in the range of from 0.05 g/10 min to 20 g/10 min, preferably in the range of from 0.5 to 4.0 g/10 min, more preferably in the range of from 1.0 to 3.0 g/10 min.

More preferably at least requirements (i) and (ii), or (i) and (iii), or (i) and (iv), or (ii) and (iii), or (ii) and (iv), or (iii) and (iv) are fulfilled. Even more preferably at least requirements (i), (ii) and (iii), or (i), (ii) and (iv), or (i), (iii) and (iv), or (ii), (iii) and (iv) are fulfilled.

Thus, it is preferred that Polymer B has a weight average molecular weight in the range of from 270000 Da to 325000 Da, a number average molecular weight in the range of from 30000 Da and 35000 Da, a polydispersity in the range of from 8 and 10, and a melt flow index, measured at 190°C with a load of 2.16 kg, in the range of from 0.05 g/10 min to 20 g/10 min.

More preferably, the Polymer B used in the present invention has a weight average molecular weight in the range of from 285000 to 300000, a number average molecular weight in the range of from 31500 to 33500, a polydispersity of 9, and a melt flow index, measured at 190°C with a load of 2.16 kg, in the range of from 0.5 to 4.0 g/10 min.

In addition, it is preferred that the Polymer B fulfills one or more, preferably all, of following requirements (v) to (vii):

(v) a density in the range of from 940 to 970 kg/m$^3$, preferably in the range of from 950 to 960 kg/m$^3$, more preferably in the range of from 950 to 955 kg/m$^3$;
(vi) a melting temperature in the range of from 125 to 140°C, preferably in the range of from 130 to 132°C;
(vii) a crystallinity content in the range of from 50 to 75%, preferably in the range of from 65 to 75%, more preferably in the range of from 68 to 71%.

More preferably at least requirements (v) and (vi), or (v) and (vii), or (vi) and (vii) are fulfilled. Even more preferably each of requirements (v), (vi) and (vii) are fulfilled.

It is furthermore preferred that the melt strength be characterized by a maximum force between 0.05 and 0.09 N, preferably of 0.08 and 0.09 N. The drawability (max. speed of wheels) is preferably 45 cm/min.

Preferred for the present invention is a Polymer B which has bimodal distribution of the molecular weight but is preferably not a mix of polyethylene having different molecular weights prepared in extrusion process. Such Polymer B can be produced by using cascade of series polymerization reactors (e.g. two slurry reactors connected in a series with the use of Ziegler-Natta catalyst), or by using a single reactor but with catalysts having several different activity sites.

Polymer B which can be used in the present invention preferably has bimodal distribution of the molecular weight.

One preferred Polymer B has a density (measured acc. to ISO 845:2006) of 952 kg/m$^3$, an MFI (measured at 190 °C with a load of 2.16 kg, acc. to ISO 1133-1) of 2 g/10 min, a melting temperature (measured by DSC acc. to ISO 11357:2016, part 3) of from 130 to 132°C, a crystallinity content (measured by DSC acc. to ISO 11357:2016, part 3) of from 68 to 71 %, a weight average molecular weight between 275000 Da and 295000 Da, a number average molecular weight between 30000 Da and 33000 Da, and a polydispersity between 8 and 10.

Another preferred Polymer B for use in the present invention has a density of 952 kg/m3, an MFI (measured at 190 °C with a load of 2.16 kg) of 2 g/10 minutes, a melting temperature of 123.8 to 131 °C, a crystallinity content (measured by DSC acc. to ISO 11357:2016, part 3) of 69.5%, a melt strength: force minimum 0.08 N, drawability (max. speed) 45 cm/min, a weight average molecular weight of 288000 Da, a number average molecular weight of 31500 Da and a polydispersity of 9.

Other polymers

The polymers in the foam of the present invention may contain polymers other than Polymer A and Polymer B.

As used herein, the term polymer refers to material having repeating units and which typically contain at least 1000 carbon atoms, preferably 2000 carbon atoms, more preferably at least 5000 carbon atoms, or even at least 10000 carbon atoms per molecule. It is to be understood that the term polymer as used herein, unless otherwise indicated, refers to organic polymers, i.e. polymers having at least one C-H bond.

The other polymers are preferably polyolefins. Typically, at least 20% by weight, preferably 30% by weight, more preferably 50% by weight, even more preferably 70% by weight, still more preferably 90% by weight or even 95% by weight of the polymers other than Polymer A and Polymer B in the foam are polyolefins.

The term "polyolefin" as used herein refers to any polymer comprising repeating units of olefin monomers. A "polyolefin" can be a homopolymer or a copolymer. Preferably at least 50% by weight of all repeating units of a polyolefin are olefin monomers. The term "olefin" as used herein refers to acyclic and cyclic hydrocarbons having one or more non-aromatic carbon-carbon double bonds. The term "olefin" preferably does not encompass aromatic groups (such as styrene. Examples of olefins are alkenes and cycloalkenes as well as the corresponding polyenes. The term "olefin" preferably refers to $\alpha$-olefins having 3 to 10 carbon atoms, more preferably 3 to 5 carbon atoms, such as ethene, propene, 1-butene, 1-pentene, 1-hexene, 1-heptene, 1-octene, 1-nonene, 1-decene, 1-undecene or 1-dodecene. The $\alpha$-olefins are preferably $\alpha$-n-olefins. More preferred $\alpha$-olefins are selected from ethene, 1-butene and 1-octene.

Preferred as the other polymers are thus polyolefins which may comprise or consist of one or more selected from homo- or co-polyethylene not fulfilling the requirements specified for any of Polymer A and Polymer B, homo- or co-polypropylene, homo- or co-polyisoprene, homo- or co-polybutene-1, homo- or co-poly-3-methylbutene-1, homo- or co-poly-4-methylpentene-1, homo- or co-poly-1-pentene, homo- or co-poly-1-hexene, homo- or co-poly-1-heptene, homo- or co-poly-1-octene, homo- or co-poly-1-nonene, homo- or co-poly-1-decene, homo- or co-poly-1-undecene or homo- or co-poly-1-dodecene.

The one or more further polymers are more preferably selected from linear low-density polyethylene, ethylene-hexene copolymer and ethylene-octene copolymer. The one or more further polymers are preferably present in an amount in the range of from 0.01% to 10% by weight relative to the total weight of the composition. Preferably linear low-density polyethylene and/or ethylene copolymers are applied in amount between 1% and 20% by weight relative to the total amount of Polymer A and Polymer B.

Preferably, the polymers other than Polymer A and Polymer B in the foam do not amount to more than 15% by weight, more than 10% by weight, more than 8% by weight, more than 7% by weight, or even not more than 6% by weight, relative to the total amount of polymers in the foam.

Additives

Any components of the foams other than polymers are referred to herein as additives.

The amounts of additives are specified in the following are expressed as being "relative to the weight of the composition". This is considered equivalent to the term "relative to the weight of the foam", as the amount of any remaining blowing agents is typically low (e.g. less than 0.5 wt%, preferably less than 0.3 wt%, more preferably less than 0.2 wt%, such as less than 0.1 wt%). In the present invention, it is preferred that the only blowing agents to be used, are physical blowing agents.

The amount of additives is not particularly limited as the form having the desired properties may be obtained due to the use of Mixture M even in the present of high amounts of additives. However, the foam typically contains up to 90% by weight, such as up to 70% by weight, up to 50% by weight, up to 40% by weight, up to 30% by weight, or up to 20% by weight, preferably 0.1 to 20% by weight, more preferably 0.5 to 15% by weight, even more preferably 0.7 to 10% by weight, still more preferably 2% to 6% by weight of additives.

It is preferred that the foam does not contain more than 0.05% by weight of copolymers of ethylene and methacrylic acid.

Furthermore, the foam typically does not contain more than 0.05% by weight in total of any ionomer(s), relative to the total weight of the composition.

The foam can furthermore contain one or more infrared radiation absorbing or/and reflecting particles. The one or more infrared radiation absorbing or/and reflecting particles are preferably selected from aluminum, carbon black, graphite, titanium dioxide and mixtures of these. The one or more infrared radiation absorbing or/and reflecting particles preferably contain or consist of aluminum. The one or more infrared radiation absorbing or/and reflecting particles are typically present in an amount in the range of from 0.01 to 5%, preferably in the range of from 0.5 to 2% by weight relative to the total weight of the composition.

Preferably, the foam furthermore contains one or more nucleating agents. The one or more nucleating agents are preferably selected from talc, calcium carbonate, calcium silicate, titanium oxide, barium sulfate, expandable graphite, clay, montmorillonite clay, polyhedral oligomeric silsesquioxane (POSS), natural or synthetic graphite, mixture(s) of sodium bicarbonate and citric acid, or an amide, an amine and/or an ester of a saturated or unsaturated aliphatic $C_{10-34}$ carboxylic acid preferably selected from ethylene bistearamide, ethylene bisbehenamide and hexamethylene biscaproamine. The nucleating agent is typically present in an amount in the range of from 0.1 to 5% by weight, preferably in the range of from 0.5 to 3% by weight, relative to the total weight of the composition. Preferably the one or more nucleating agents are present in an amount of from 0.5 to 1.5 wt. %, relative to the total weight of the composition.

The foam of the present invention preferably furthermore contains a cell stabilizer to reduce the degree of potential foam collapse. Cell stabilizer typically retards the diffusion of, for example, hydrocarbons and thereby improves dimensional stability of the foam. The one or more cell stabilizers are preferably selected from glycerol monostearate, a mixture of glycerol monostearate and glycerol monopalmitate, and amides which are preferably selected from stearyl stearamide, stearyl erucamide, palmitamide and/or stearamide. The cell stabilizer, which is more preferably one or more selected from glycerol monostearate, stearyl stearamide and stearamide. The one or more cell stabilizers are typically present in an amount in the range of from 0.1 to 2.5% by weight, preferably in the range of from 1.0 to 2.5% by weight, relative to the total weight of the composition.

The foam may furthermore contain one or more flame retardants. Flame retardants can be halogenated flame retardants and/or halogen free flame retardants. The halogenated flame retardants are preferably selected from chlorinated paraffine, chlorinated polyethylene, and tetrabromobisphenol A-dibromopropyl ether. The halogen free flame retardants are preferably selected from aluminium trihydroxide, magnesium dihydroxide, melamine, triazine derivatives, triphenyl phosphates, piperazine pyrophosphate and etylenediamine. The one or more flame retardants are typically present in an amount in the range of from 0.1 to 10% by weight relative to the total weight of the composition, preferably 0.1 to 5% by weight.

If one or more flame retardents with a melting point lower than 120°C are used, the total amount of such one or more flame retardents with a melting point lower than 120°C is preferably in the range of 0.01 -1 % by weight relative to the total weight of the composition, preferably in the range of 0.1 - 0.5 % by weight relative to the total weight of the composition, in order to achieve improved temperature resistance.

The foam can furthermore contain one or more synergists for halogenated flame retardants and/or smoke suppressants. The one or more synergists are preferably selected from antimony trioxide, zinc stannate and zinc borate. Typically, the one or more synergists are present in an amount in the range of from 0.1 to 2% by weight relative to the total weight of the composition.

As will be understood by a skilled person, the foam optionally furthermore contains one or more selected from opacifiers, pigments, UV stabilizers, lubricants, antistatic agents, processing aids, slipping agents and anti-blocking agents. The selection and amounts thereof may be varied by the skilled person, e.g., depending on the intended use of the foam.

Process of manufacture of the foam

The foam of the present invention is preferably physically foamed. wherein the foam is obtained using one or more blowing agents preferably selected from isobutane, $CO_2$, n-butane, pentane, nitrogen, and/or fluorohydrocarbons, wherein the foam is more preferably obtained using isobutane as a blowing agent. The blowing agent is typically used in an amount in the range of from 5 to 16% by weight, preferably in the range of from 8 to 14% by weight, relative to the total weight of the other components of the composition to be foamed.

Gaseous blowing agents are continuously injected to the extruder, typically under pressure. Typical injection pressure for isobutane is in the range of 100 bar to 300 bar depending on material throughput and requested gas content in the foam. The injection port is typically placed after the feeding and melting zones of the extruder. i.e., when polymer is in a molten state. This is described in Blowing Agents and Foaming Processes 2013, Conference Proceeding, May 2013, Mainz, Germany, Ch. Schlummer, paper 9, pages 1-6.

The foam of the present application is preferably continuously extruded, for examples as follows. Polymer and any additives pellets are typically fed to the extruder and plasticated to melt. Then the physical blowing agent is injected into a mixing section of extruder under the pressure. The mixture is transported into a cooling section (or a cooling extruder in case of a tandem line). The mixture is cooled down to a temperature which is within 10 degrees Celsius of the polymer freezing point. The pressure in extruder must be held high enough in order to keep the gas blowing agent dissolved in PE melt, however, must be low enough to avoid adding more heat to the solution. The cooled solution is extruded out of an extruder die. Due to the pressure drop to atmospheric pressure on exiting from the die, blowing agent expands immediately and foamed product is created. Foam extrusion process is described in detail in the literature e.g.: Foam extrusion - Principles and Practice, Second Edition, Edited by S. T Lee and Chul B. Park, CRC Press, 2014

Polymer foams can be also produced in a batch process. One of the disadvantages of the batch process is a long cycle time required for the gas saturation in the polymer. Besides, in the batch process products pass through a number of steps, each adding cost to the production process and increasing the overall duration of the manufacturing process. Continuous extrusion is a cost-effective, process which allows the production of materials to take place without interruption and the products are of consistently high quality. In foam extrusion, much shorter time is needed for the saturation of the polymer with gas in comparison to the batch process. The injected gas diffuses into the polymer matrix at a much higher rate because of a convective diffusion induced in the extrusion barrel at an elevated temperature. Generally, batch production is a preferred method for smaller production volume or production requiring customization - but for those who require large quantities of a particular item, continuous manufacturing remains the most effective method of production. (ACS Symposium Series, Polymer Foams, Editor Kishan C. Khemani, Chapter 8, Washington 1997).

A typical process of preparation of the foam of the present invention comprises the following steps:

(a) providing a molten composition containing the components for the foam,
(b) heating the molten composition to a temperature T1,
(c) adding a blowing agent to the molten composition,
(d) cooling the molten composition containing the blowing agent to a temperature T2 which is lower than the temperature T1,
(e) extruding the composition.

The components for the foam are typically all materials to be contained in the foam, except for any physical blowing agents.

T1 is typically in the range of from 160 to 180°C, preferably in the range of from 165 to 175, such as about 170°C. T2 is typically in the range of from 102 to 120°C, preferably in the range of from 110 to 115°C.

The skilled person is well aware of suitable means for adjusting the settings on the respective extruders in an appropriate manner. There are three major setups for extruders suitable for PE foaming: single screw extruder (SSE) with big L/D ratio typically > 32:1, twin screw extruder (TSE) with short L/D ratio 23:1 vs long L/D ratio 40:1 and tandem extruder (first twin screw extruder for mixing and gas injection, second singe screw extruder for cooling). The extruder might be additionally equipped with cooling devices, such as a meltcooler or a static mixer.

Typically, the extruder throughput is in the range of from 1 to 200 kg/h, preferably in the range of from 10 to 150 kg/h, even more preferably in the range of from 20 to 100 kg/h. The injected quantity of isobutane may, e.g., be in the range of from 0.2 to 25 kg/h, preferably in the range of from 0.5 to 20 kg/h, even more preferably in the range of from 2 to 15 kg/h.

The respective extruder zones may, e.g., be set to a temperature in the range of:

Feeding zones: 100 - 170°C
Melting zones: 140 - 170 °C
Metering zones: 110 - 160 °C

In typical settings, the temperature of the meltcooler can, e.g., be set to a range of from 102 to 115°C, while the temperature of the static mixer is preferably in a range of from 105 to 115°C and/or the temperature of the head is typically set to a range of from 102 to 115°C.

Articles comprising the foam

The foam of the present invention can be formed into various shapes for various applications. For example, the foam may be used as a material of a thermal insulation tube, rod, profile or sheet. Thus, the thermal insulation tube, rod, profile or sheet may comprise the foam according to the present invention or the foam obtained by the process according to the present invention.

Methods of measurement

The parameters referred to herein are measured as set out in the following:

| | |
|---|---|
| Density of polyethylene: | according to ISO 845:2006 |
| Density of the foam: | according to ISO 2781 |
| Melting temperature: | by DSC according to ISO 11357:2016, part 3 |
| Crystallisation temperature: | by DSC according to ISO 11357:2016, part 3 |
| Crystalline phase: | by DSC according to ISO 11357:2016, part 3 |
| Polydispersity: | by High temperature gel permeation chromatography (ASTM D6474-20, eluent: 1,2,4 trichlorobenzene, temperature: 160°C, calibration with polystyrene). |
| Molecular weight distribution: | by high temperature gel permeation chromatography (ASTM D6474-20, eluent: 1,2,4 trichlorobenzene, temperature: 160°C, calibration with polystyrene). |
| Maximum service temperature: | according to EN 14707 standard. Steps in the test temperature are 5°C up to 100°C, but 10°C above 100°C. If the thickness change is below 7%, the technical parameters are assumed to remain at the given conditions. |
| Melt flow index | at 190 °C with a load of 2.16 kg, according to ISO 1133-1 |
| Melt strength: | based on Rheotens experiment, M.H. Wagner, V. Schulze, and A.Gottfert. Rheotens mastercurves and drawability of polymer melts. Polym. Eng. Sci., 36, pages 925 to 935, 1996 |
| MFI: | at 190°C with a load of 2.16 kg, according to ISO 1133-1 |
| Thermal conductivity: | according to EN ISO 8497 |
| Open cell content: | using a gas pycnometer that can be operated with nitrogen or argon based on the method of ASTM D6226, as described in the experimental examples provided herein |
| Total amount of inorganic filler: | by TGA analysis according to ISO 11358 |

The amounts of Polymer B relative to Polymer A can be detected using standard DSC or TREF DSC. The peak of Polymer B is seen during heating and also cooling of the melt.

Definitions

As used herein, terms such as "preferably", "such as", "for example", "may" or "typically" are used to indicate features which are not mandatory but desirably fulfilled in the present application in order to obtain products with further improved features.

As used herein, the term "foam" is understood as referring to a material which has been expanded, typically by the use of chemical or physical blowing agents. A foam preferably contains multiple (preferably 10 pores per $cm^3$ or more) gas inclusions. A foam preferably has a density which is less than 80% by weight, preferably less than 70% by weight, more preferably less than 50% by weight, more preferably less than 30% by weight, more preferably less than 20% by weight, more preferably less than 10% by weight, even more preferably less than 5% by weight, still more preferably less than 3% by weight, yet preferably 1% by weight or more (or even 2% by weight or more), relative to the density of the material of the foam when the gas inclusions have been removed. The term "density of the material of the foam when the gas inclusions have been removed" may also be expressed as being the density of the solid material prior to foaming.

As used herein, the term "LDPE" or "low density polyethylene" is understood to be polyethylene homopolymer, typically having a density of 910 to 935 $kg/m^3$, preferably 915 to 935 $kg/m^3$, more preferably 915 to 930 $kg/m^3$. LDPE is typically produced with free radical initiators. LDPE typically exhibits a degree of crystallinity which is lower than that of LLDPE and HDPE.

As used herein, the term "HDPE" or "high density polyethylene" is understood to be polyethylene homopolymer or copolymer having a density of 940 to 980 $kg/m^3$, preferably 940 to 975 $kg/m^3$, more preferably 940 to 970 $kg/m^3$, even more preferably more than 940 (such as 941 or more) to 967 $kg/m^3$. If HDPE is a copolymer, the content of monomer units other than ethylene (preferably being selected from one or more $\alpha$-olefin(s)) is generally lower than 1 mol%, based on the total molar amount of monomer units. HDPE is typically produced with coordination catalysts. HDPE typically exhibits a degree of crystallinity which is higher than that of LDPE and LLDPE.

As used herein, the term "LLDPE" or "linear low-density polyethylene" refers to ethylene copolymer typically having shorter branches than "LDPE" and preferably having a density of 910 to less than 940 kg/m$^3$, preferably 915 to less than 940 kg/m$^3$, more preferably 915 to 935 kg/m$^3$. LLDPE are preferably ethylene copolymers with one or more $\alpha$-olefin(s). LLDPE is typically produced with coordination catalysts. Butene-1, hexene-1 and octene-1 are the most common comonomers, resulting in LLDPE with short chain branches. Typically, comonomer content is in the range of about 2% to 4% (molar). LLDPE typically exhibits a degree of crystallinity which is higher than that of LDPE and lower than that of HDPE.

Spectroscopic techniques like NMR and IR are frequently used to characterize the branching features (type and relative amount) in copolymers.

ASTM D6645-18 is a standard test method for methyl (comonomer) content in polyethylene by infrared spectrophotometry.

As used herein, the term "comprising" (or "comprise", "comprises", "contain", "contains", or "containing"), unless explicitly indicated otherwise or contradicted by context, has the meaning of "containing, inter alia", i.e., "containing, among further optional elements,...". In addition, this term also includes the narrower meanings of "consisting essentially of" and "consisting of". For example, the term "A comprising B and C" has the meaning of "A containing, inter alia, B and C", wherein A may contain further optional elements (e.g., "A containing B, C and D" would also be encompassed), but this term also includes the meaning of "A consisting essentially of B and C" and the meaning of "A consisting of B and C" (i.e., no other components than B and C are comprised in A).

As used herein, the term "about" refers to ±50% of the last indicated digit, preferably to 20% of the last indicated digit (for example, the value of "about 90%" may refer to the range of "from 89.5 to 90.5%"), and in particular to the exact numerical value indicated.

Unless specifically indicated otherwise, all properties and parameters referred to herein (including, e.g., any amounts/concentrations indicated in "mg/ml" or in "% (v/v)", and any pH values) are preferably to be determined at standard ambient temperature and pressure conditions, particularly at a temperature of 25°C (298.15 K) and at an absolute pressure of 101.325 kPa (1 atm.).

Furthermore, it is to be understood that the present invention specifically relates to each and every combination of features and embodiments described herein, including any combination of general and/or preferred features/embodiments. In particular, the invention specifically relates to all combinations of preferred features described herein.

In this specification, a number of documents including patents, patent applications and scientific literature are cited. The disclosure of these documents, while not considered relevant for the patentability of this invention, is herewith incorporated by reference in its entirety. More specifically, all referenced documents are incorporated by reference to the same extent as if each individual document was specifically and individually indicated to be incorporated by reference.

The present invention may be summarized by the following items:

Item 1: A foam obtainable by foaming a composition comprising Mixture M consisting of Polymer A and Polymer B, wherein the content of Mixture M, relative to the total weight of polymers in the composition, is at least 80 wt.-%, and wherein

Polymer A is polyethylene with a density of 925 to 935 kg/m$^3$ and/or a melting point of 110°C or more, and Polymer B is polyethylene with a density in the range of from 940 to 980 kg/m$^3$ which furthermore has a number average molecular weight in the range of from 30000 Da and 35000 Da, and/or a polydispersity in the range of from 8 and 10,

wherein Polymer A is present in Mixture M at 62.5 to 92.9% by weight, relative to the total weight of Mixture M.

Item 2: The foam according to item 1, wherein the polymers comprise, relative to the total weight of polymers in the composition, 82 wt.-% or more, preferably 84 wt.-% or more, more preferably 86 wt.-% or more, still more preferably 88 wt.-% or more, still even more preferably 90 wt.-% or more, or even 92 wt.-% or more, 94 wt.-% or more, 96 wt.-% or more of Mixture M.

Item 3: The foam according to item 1 or 2, wherein at least 99.8 wt.-%, preferably at least 99.9 wt.-%, more preferably 99.95 wt.-%, even more preferably 99.99 wt.-%, of the repeating units in Polymer A are repeating units derived from ethylene and/or at least 99 wt.-%, preferably at least 99.3 wt.-%, more preferably 99.6 wt.-%, even more preferably 99.8 wt.-%, of the repeating units in Polymer B are repeating units derived from ethylene.

Item 4: The foam according to item 1 or 2, wherein Polymer A is obtainable by polymerizing a monomer mixture comprising at least 99.8 wt.-%, preferably at least 99.9 wt.-%, more preferably 99.95 wt.-%, even more preferably 99.99 wt.-%, ethylene and/or Polymer B is obtainable by polymerizing a monomer mixture comprising at least 99 wt.-%, preferably at least 99.3 wt.-%, more preferably 99.6 wt.-%, even more preferably 99.8 wt.-%, ethylene.

Item 5: The foam according to any of items 1 to 4, wherein Polymer A is low-density polyethylene having a density in the range of from 925 to 935 kg/m$^3$ and Polymer B is high-density polyethylene with a density in the range of from 940 to 980 kg/m$^3$.

Item 6: The foam according to any one of the preceding items, wherein the foam does not contain more than 0.05 wt.-% of copolymers of ethylene and methacrylic acid, preferably wherein the foam does not contain more than 0.05 wt.-% of ionomer(s).

Item 7: The foam according to any one of the preceding items, wherein the content of open cells is less than 30%, preferably less than 25%, more preferably less than 20%, 15% or even less than 10 %, based on all cells in the foam.

Item 8: The foam according to any one of the preceding items, wherein the content of closed cells is at least 70%, preferably at least 75%, 78%, 80%, 83%, 85%, 88% or even at least 90%, based on all cells in the foam.

Item 9: The foam according to any one of the preceding items, wherein the ratio of closed cells to open cells is at least 2.3, preferably at least 3, more preferably at least 5, 6, 7, 8, 9, 10, 11, 12, 13, 14, 15, 16, 17, 18, 19 or even 20.

Item 10: The foam according to any of preceding items, wherein Polymer B fulfills one or more, preferably all, of the following requirements (i) to (iv):

(i) a weight average molecular weight in the range of from 270000 Da to 325000 Da; preferably from 285000 to 300000.
(ii) a number average molecular weight in the range of from 30000 Da and 35000 Da; preferably 31500 to 33500.
(iii) a polydispersity in the range of from 8 and 10, preferably 9;
(iv) a melt flow index, measured at 190°C with a load of 2.16 kg, in the range of from 0.05 g/10 min to 20 g/10 min, preferably in the range of from 0.5 to 4.0 g/10 min, more preferably in the range of from 1.0 to 3.0 g/10 min.

Item 11: The foam according to any one of the preceding items, wherein Polymer B fulfills one or more, preferably all, of following requirements (v) to (vii):

(v) a density in the range of from 940 to 970 kg/m$^3$, preferably in the range of from 950 to 960 kg/m$^3$, more preferably in the range of from 950 to 955 kg/m$^3$;
(vi) a melting temperature in the range of from 125 to 140°C, preferably in the range of from 130 to 132°C;
(vii) a crystallinity content in the range of from 50 to 75%, preferably in the range of from 65 to 75%, more preferably in the range of from 68 to 71%.

Item 12: The foam according to any one of the preceding items, wherein Polymer A fulfills one or more or all of the following requirements (i) to (iv):

(i) a density in the range of from 925 to 930 kg/m$^3$, preferably in the range of from 925 to 928 kg/m$^3$, more preferably in the range of from 925 to 927 kg/m$^3$;
(ii) a melt flow index, measured at 190°C with a load of 2.16 kg, in the range of from 0.1 g/10 min to 22 g/10 min, preferably in the range of from 0.25 to 4 g/10 min, more preferably in the range of from 0.50 to 0.80 g/10 min, even more preferably in the range of from 0.60 to 0.70 g/10 min;
(iii) a melting temperature in the range of from 110°C to 115°C, preferably in the range of from 110°C to 114°C, more preferably in the range of from 112°C to 114°C;
(iv) a crystallization temperature in the range of from 96°C to 104 °C, preferably in the range of from 99°C to 104°C, more preferably in the range of from 102°C to 104°C.

Item 13: The foam according to any one of the preceding items, wherein the foam is obtained using one or more blowing agents preferably selected from isobutane, COz, n-butane, pentane, nitrogen, and/or fluorohydrocarbons, wherein the foam is more preferably obtained using isobutane as a blowing agent.

Item 14: The foam according to the preceding item, wherein the blowing agent is used in an amount in the range of from 5 to 16% by weight, preferably in the range of from 8 to 14% by weight, relative to the total weight of the other components of the material to be foamed. Item 15: The foam according to any one of the preceding items, wherein the foam furthermore contains one or more infrared radiation absorbing or/and reflecting particles, wherein the one or more infrared radiation absorbing or/and reflecting particles are preferably selected from aluminum, carbon black, graphite, titanium dioxide.

Item 16: The foam according to the preceding item, wherein the one or more infrared radiation absorbing or/and reflecting particles are present in an amount in the range of from 0.01 to 3%, preferably in the range of from 0.5 to 1% by weight relative to the total weight of the composition.

Item 17: The foam according to any one of the preceding items, wherein the foam furthermore contains one or more nucleating agents, preferably selected from talc, calcium carbonate, calcium silicate, titanium oxide, barium sulfate, expandable graphite, clay, montmorillonite clay, polyhedral oligomeric silsesquioxane (POSS), natural or synthetic graphite, mixture(s) of sodium bicarbonate and citric acid, or an amide, an amine and/or an ester of a saturated or unsaturated aliphatic $C_{10-34}$ carboxylic acid preferably selected from ethylene bistearamide, ethylene bisbehenamide and hexamethylene biscaproamine.

Item 18: The foam according to the preceding item, wherein the nucleating agent is present in an amount in the range of from 0.1 to 3 % by weight, preferably in the range of from 0.5 to 1.5 % by weight, relative to the total weight of the composition.

Item 19: The foam according to any one of the preceding items, wherein the foam furthermore contains one or more cell stabilizers preferably selected from glycerol monostearate, a mixture of glycerol monostearate and glycerol monopalmitate, and amides which are preferably selected from stearyl stearamide, stearyl erucamide, palmitamide and/or stearamide, wherein the cell stabilizer which is more preferably one or more selected from glycerol monostearate, stearyl stearamide and stearamide.

Item 20: The foam according to the preceding item, wherein the cell stabilizer is present in an amount in the range of from 0.1 to 2.5 % by weight, preferably in the range of from 1.0 to 1.5 % by weight, relative to the total weight of the composition.

Item 21: The foam according to any one of the preceding items, wherein the further polymers (also referred to a "polymers C") comprise one or more selected from linear low density polyethylene, ethylene-hexene copolymer and ethylene-octene copolymer.

Item 22: The foam according to the preceding item, wherein the further polymers (also referred to a "polymers C") are present in an amount in the range of from 0.01% to 10% by weight relative to the total weight of the composition.

Item 23: The foam according to any one of the preceding items, wherein the foam furthermore contains one or more flame retardants such as halogenated flame retardants and/or halogen free flame retardants, wherein the halogenated flame retardants are preferably selected from chlorinated paraffine, chlorinated polyethylene, and tetrabromobisphenol A-dibromopropyl ether, and the halogen free flame retardants are preferably selected from melamine, triazine derivatives, triphenyl phosphates, piperazine pyrophosphate and etylenediamine.

Item 24: The foam according to the preceding item, wherein the one or more flame retardants are present in an amount in the range of from 0.1 to 10% by weight relative to the total weight of the composition, preferably 0.5 to 5% by weight.

Item 25: The foam according to any one of the preceding items, wherein the foam furthermore contains one or more synergists for halogenated flame retardants and/or smoke suppressants, wherein the one or more synergists are preferably selected from antimony trioxide, zinc stannate and zinc borate.

Item 26: The foam according to the preceding item, wherein the one or more synergists are present in an amount in the range of from 0.1 to 3% by weight relative to the total weight of the composition.

Item 27: The foam according to any one of the preceding items, wherein the foam furthermore contains one or more selected from opacifiers, pigments, UV stabilizers, lubricants, antistatic agents, processing aids, slipping agents and anti-blocking agents.

Item 28: The foam according to any one of the preceding items, wherein the foam is physically foamed.

Item 29: The foam according to any one of the preceding items, wherein the foam is continuously extruded.

Item 30: The foam according to any one of the preceding items, wherein the foam has increased temperature resistance while retaining thermal insulation properties.

Item 31: The foam according to any one of the preceding items, wherein the foam has a maximum service temperature higher than 90 °C, preferably higher than 100 °C, more preferably higher than 115 °C, even more preferably higher than 117°C or even higher than 120 °C, as measured according to EN 14707.

Item 32: The foam according to any one of the preceding items, wherein the foam has a lambda ($\lambda$) value below 0.050 W/m*K at 40°C, preferably below 0.045 W/m*K, more preferably below 0.035 W/m*K, even more preferably below 0.034, below 0.033, below 0.032, below 0.031 or even below 0.030 W/m*K, as measured according to DIN EN ISO 8497.

Item 33: The foam according to any one of the preceding items wherein the foam has increased temperature resistance while remaining thermal insulation properties.

Item 34: The foam according to any one of the preceding items wherein the has a density between 17 and 40 kg/m$^3$, preferably between 25 and 30 kg/m$^3$.

Item 35: A method of preparation of a foam as defined in any one of the preceding items, wherein the method comprises the following steps:

(a) providing a molten composition containing the components as defined in any of the preceding items,
(b) heating the molten composition to a temperature T1,
(c) adding a blowing agent to the molten composition,
(d) cooling the molten composition containing the blowing agent to a temperature T2 which is lower than the temperature T1,

(e) extruding the composition.

Item 36: The method according to item 35, wherein one the blowing agent is one or more selected from isobutane, $CO_2$, n-butane, pentane, nitrogen, and/or fluorohydrocarbons, wherein the blowing agent preferably comprises or consists of isobutane.

Item 37: The method according to the item 35, wherein one or more of the following requirements (i) to (vi) apply:

(i) the extruder throughput is in the range of from 1 to 200 kg/h, preferably in the range of from 10 to 150 kg/h, even more preferably in the range of from 20 to 100 kg/h.

(ii) the injected quantity of isobutane is in the range of from 0.2 to 25 kg/h, preferably in the range of from 0.5 to 20 kg/h, even more preferably in the range of from 2.5 to 15 kg/h;

(iii) depending on the content of Polymer B, subsequent extruder zones are set to a temperature in the range of:

Feeding zones: 100 - 160°C
Melting zones: 140 - 160 °C
Metering zones: 110 - 160 °C

(iv) the temperature of the meltcooler is set to a range of from 102 to 115°C,

(v) the temperature of the static mixer is set to a range of from 105 to 115°C.

(vi) the temperature of the head is set to a range of from 102 to 115°C.

38: A thermal insulation tube, rod, profile or sheet comprising the foam according to any one of items 1 to 34 or the foam obtained by the process according to any of items 35 to 37.

The Figures

The invention is also described by the following illustrative figures:

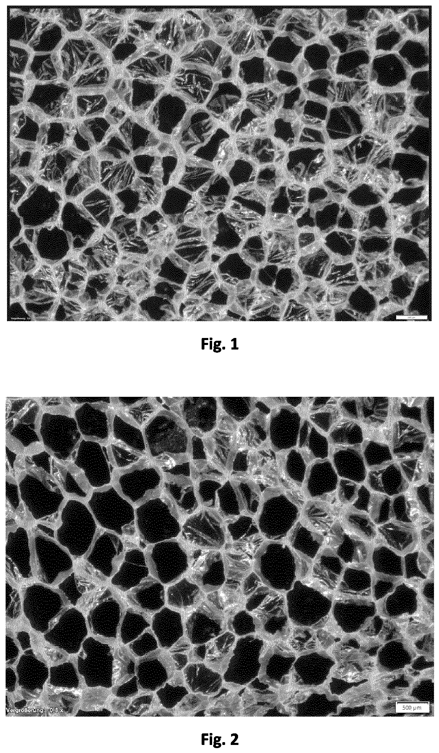

**Figure 1.** Cell Structure Foam Example 3, Stereomicroscope SZX-7 with digital camera ColorView U-TV0.5xc-3.

**Figure 2.** Cell Structure Foam Example A (Comparative Example), Stereomicroscope SZX-7 with digital camera ColorView U-TV0.5xc-3.

The invention will now be described by reference to the following examples which are merely illustrative and are not to be construed as a limitation of the scope of the present invention.

EXAMPLES

**Materials**

| | |
|---|---|
| LDPE 1 (melt index of 2.0 g/10 min and density 921 kg/m$^3$, melting point 107°C) | Sabic, grade 2102 |
| LDPE 2 (melt index of 0.65 g/10 min and density 926 kg/m$^3$, melting point 114°C), a Polymer A according to the invention | Sabic, grade 2601X1 |
| HDPE 1 (polydispersity of 9.09, weight average molecular weight of 288000 Da, number average molecular weight of 31600 Da, melt index 2.0 g/10 min and density 952 kg/m$^3$), a Polymer B according to the invention | Braskem, grade GE 7252 |
| HDPE 2 (polydispersity of 12.7, weight average molecular weight of 320000 Da, number average molecular weight of 25200 Da, melt index 0.8 g/10 min and density 953 kg/m$^3$), | Sabic, grade CC027C |
| HDPE 3 (polydispersity of 12.4, weight average molecular weight of 346000 Da, number average molecular weight of 27900 Da melt flow index of 0.5 dg/10 min, density 962 kg/m3) | Sabic, grade B6246 |

(continued)

| | |
|---|---|
| ethylene-octene copolymer (melt flow index of 1.0 g/10 min and density 902 kg/m$^3$, melting point 98°C) | Sabic, Cohere 8102 |
| glycerol monostearate GMS | Croda, Atmer 1013 |
| stearamide | Croda, Crodamide S BE |
| aluminum powder, masterbatch in PE | Clariant, Remafin Silver |
| Talc powder, masterbatch in PE | Granula, PE-Masterbatch TA 35 |
| chlorinated paraffin (CP70), masterbatch in PE | Produits Chemiques Lucette, MB44PB |
| antimony trioxide, masterbatch in PE | Produits Chemiques Lucette, MB44PB |

**Methods of measurement**

This invention is illustrated by the following examples given for illustrative purpose and not to be regarded as limiting the invention or the manner in which it can be practice.

To characterize the properties of polyethylene foam, the density was measured according to ISO 2781, thermal conductivity in compliance with EN ISO 8497, maximum service temperature based on the testing method EN 14706.

The determination of open cell content was done using a gas pycnometer that can be operated with nitrogen or argon based on the method ASTM D6226.

The determination of open cell content was done using the following equation:

$$C\ (\%) = \frac{V_{sample} - V_{pycnometer}}{V_{sample} \cdot (1 - \frac{\rho_{foam}}{\rho_{solid}})} \cdot 100$$

Where: $V_{sample}$ - geometric volume of the considered sample

$V_{pycnometer}$ - volume of the sample measured using the gas pycnometer

$\rho_{foam}$ - density of the foamed material

$\rho_{solid}$ - density of the corresponding counterpart

To eliminate the potential effect of an undesirable deformation of the material during the measurement, due to the effect of the pressure exerted by the gas introduced in the pycnometer, the volume of the sample ($V_{sample}$) is measured at different pressures.

The volume of the sample measured with the pycnometer as a function of pressure is used to represent the $\frac{V_{sample} - V_{pycnometer}}{V_{sample}}$ as a function of pressure. The obtained curved is fitted to a linear-like trend to calculate the volume of the sample at 0-pressure. Such value of the volume is used to calculate the open cell content of the products.

The cellular structure of the samples was evaluated using a methodology combining optical microscopy and image analysis developed by CellMat Technologies S.L. (Valladolid, Spain) and known as AutoCell. The methodology includes the acquisition of optical micrographs, using a painting system to enhance the contrast and running an image analysis macro based on ImageJ software to perform a quantitative analysis of the cellular structure of foamed materials (Ismael Sánchez-Calderón, Victoria Bernardo, Daniel Cuadra-Rodríguez, Judith Martín-de-León, Miguel Angel Rodríguez-Pérez, Polymer, Volume 261, 2022, 125397).

To characterize the virgin HDPE and LDPE polydispersity and molecular weight distribution were measured by high temperature gel permeation chromatography acc. to ASTM D6474-20, eluent: 1,2,4 trichlorobenzene, temperature: 160°C, calibration done using polystyrene. Density measured acc. to ISO 845:2006. Melt flow index (MFI) measured at 190°C with a load of 2.16 kg, acc. to ISO 1133-1. Melting temperature and crystallization temperature measured by DSC acc. to ISO 11357:2016, part 3.

For the comparative example A, the example 1 and the reference examples 4-6, a twin-screw extruder having a screw diameter of 28.3 mm and L/D = 48, followed by a meltcooler, a static mixer and a head fitted with a die and pin was applied to produce foam tubes. The extruder throughput was 15 kg/h. The injected quantity of isobutane was 1.6 kg/h. The rotations per minute of the extruder screw are set to a range of from 70 to 100. Temperature profile in the extruder is shown in the Table 1.

For the examples 2-3, a twin-screw extruder having a screw diameter of 90 mm and L/D = 23, followed by a meltcooler and a head fitted with a die and pin was applied to produce foam tubes.

The extruder throughput was in the range of 65-70 kg/h. The injected quantity of isobutane was 8.5-8.6 kg/h. The rotations per minute of the extruder screw was 24. Temperature profile in the extruder is shown in the Table 3.

**Example A (comparative example)**

This comparative example describes a foam with maximum service temperature of 100°C.

A composition consisting of 88.5 wt. % LDPE (type Sabic 2102 with melt index of 2.0 g/10 min and density 921 kg/m$^3$), 6.0 wt. % ethylene-octene copolymer, 1.5 wt. % glycerol monostearate GMS (Croda, Atmer 1013), 2.0 wt. % Remafin Silver (aluminum masterbatch), 2.0 wt. % MB44PB (masterbatch of chlorinated paraffin CP70 with antimony trioxide), each by weight of the mixture, was continuously extruded.

When considering the contents of the masterbatches, this may also be expressed as being a composition consisting of 88.5 wt. % LDPE (type Sabic 2102 with melt index of 2.0 g/10 min and density 921 kg/m$^3$), 6.0 wt. % ethylene-octene copolymer, 1.5 wt. % glycerol monostearate GMS (Croda, Atmer 1013), 1.2% LDPE (melt index 20 g/10 min, from the aluminum masterbatch), 1.1% LDPE (melt index 1.0 g/10 min, from the masterbatch of chlorinated paraffin CP70 with antimony trioxide), 0.8% aluminum flakes, 0.7 wt. % chlorinated paraffin CP70, 0.2 wt. % antimony trioxide, each by weight of the mixture.

The extrusion process was stable and a produced foamed tube with a fine and uniform cell structure was obtained at a foam density about 29.0 kg/m$^3$. Open cell content was 12.8%. Foam exhibits maximum service temperature of 100°C, typical for polyethylene foam with low density, and thermal conductivity of 0.040 W/m·K at 40°C. The foam failed during the test of service temperature at 120°C (wall thickness change was higher than 7%).

TABLE 1

| Feature | Comparative Example A | Example 1 |
|---|---|---|
|  | Parameters | |
| Temperature of feeding and melting zones (°C) | 155-135 | 170-150 |
| Temperature of gas injection zone (°C) | 130 | 150 |
| Temperature of mixing and cooling zones (°C) | 120-103 | 140-115 |
| Temperature of meltcooler (°C) | 100 | 111 |
| Temperature of static mixer (°C) | 100 | 112 |
| Temperature of head (°C) | 100 | 112 |
| Throughput (kg/h) | 15 | 11 |
| Gas injection (kg/h) | 1.6 | 1.3 |

TABLE 2

| Melt pressure before meltcooler and at extruder head | | |
|---|---|---|
|  | Melt pressure (bar) | Head pressure (bar) |
| Comparative example A | 50 | 15 |
| Example 1 | 55 | 18 |

**Example 1**

A composition consisting of 87.7 wt. % LDPE (type Sabic 2601X1 with melt index of 0.65 g/10 min and density 926 kg/m$^3$), 7.5 wt. % HDPE (with polydispersity of 9.09, weight average molecular weight of 288000 Da, number average molecular weight of 31600 Da, melt index 2.0 g/10 min and density 952 kg/m$^3$), ), 1.3 wt. % glycerol monostearate GMS (Croda, Atmer 1013), 1.5 wt. % MB44PB, 2.0 wt. % Remafin Silver, each by weight of the mixture, was extruded.

When considering the contents of the masterbatches, this may also be expressed as being a composition consisting of 87.7 wt. % LDPE (type Sabic 2601X1 with melt index of 0.65 g/10 min and density 926 kg/m$^3$), 7.5 wt. % HDPE (with polydispersity of 9.09, weight average molecular weight of 288000 Da, number average molecular weight of 31600 Da, melt index 2.0 g/10 min and density 952 kg/m$^3$), ), 1.3 wt. % glycerol monostearate GMS (Croda, Atmer 1013), 0.81% LDPE (melt index 1.0 g/10 min), 1.2 wt. % LDPE (melt index 20 g/10 min) 0.52 wt. % chlorinated paraffin CP70, 0.17 wt. %

antimony trioxide, 0.8 wt. % aluminum powder, each by weight of the mixture.

A fine cellular tube was obtained with a foam density of 31.8 kg/m$^3$ (Table 7).

The sample passed the test of maximum service temperature at 120°C (Table 8). It was proven that only 7.5 wt. % of HDPE can enhance thermal stability of LDPE based foam.

Addition of HDPE increased slightly open cell content, however thermal insulation properties were maintained.

The process parameters for Comparative Example A and Example 1 are presented in Tab.1. The melt pressure at the extruder and pressure at the head are given in Tab. 2.

**Example 2**

Foaming was repeated on another extruder, applying much higher throughput to prove that by upscaling, low content of open cells, thermal conductivity of around 0.040 W/m*K and the maximum service temperature of 120° can be kept. Moreover, stearamide wax was used instead of GMS.

A composition consisting of 87.3 wt. % LDPE (type Sabic 2601X1 with melt index of 0.65 g/10 min and density 926 kg/m$^3$), 7.5 wt. % HDPE (with polydispersity of 9.09, weight average molecular weight of 288000 Da, number average molecular weight of 31600 Da, melt index 2.0 g/10 min and density 952 kg/m$^3$), ), 1.7 wt. % stearamide (Croda, Crodamide S BE), 1.5 wt. % MB44PB, 2.0 wt. % Remafin Silver, each by weight of the mixture, was extruded.

When considering the contents of the masterbatches, this may also be expressed as being a composition consisting of 87.3 wt. % LDPE (type Sabic 2601X1 with melt index of 0.65 g/10 min and density 926 kg/m$^3$), 7.5 wt. % HDPE (with polydispersity of 9.09, weight average molecular weight of 288000 Da, number average molecular weight of 31600 Da, melt index 2.0 g/10 min and density 952 kg/m$^3$), ), 1.7 wt. % stearamide (Croda, Crodamide S BE), 0.81% LDPE (melt index 1.0 g/10 min), 1.2 wt. % LDPE (melt index 20 g/10 min) 0.52 wt. % chlorinated paraffin CP70, 0.17 wt. % antimony trioxide, 0.8 wt. % aluminum powder, each by weight of the mixture.

A fine cellular tube was obtained with a foam density of 33 kg/m$^3$. Open cell content is reduced in comparison to Example 1 (Table 7). It was possible to achieve even improved thermal conductivity of 0.0386 W/m·K (Table 8).

**Example 3**

A composition consisting of 79.8 wt. % LDPE (type Sabic 2601X1 with melt index of 0.65 g/10 min and density 926 kg/m$^3$), 15 wt. % HDPE (with polydispersity of 9.09, weight average molecular weight of 288000 Da, number average molecular weight of 31600 Da, melt index 2.0 g/10 min and density 952 kg/m$^3$), ), 1.7 wt. % stearamide (Croda, Crodamide S BE), 1.5 wt. % MB44PB, 2.0 wt. % Remafin Silver, each by weight of the mixture, was extruded.

When considering the contents of the masterbatches, this may also be expressed as being a composition consisting of 79.8 wt. % LDPE (type Sabic 2601X1 with melt index of 0.65 g/10 min and density 926 kg/m$^3$), 15 wt. % HDPE (with polydispersity of 9.09, weight average molecular weight of 288000 Da, number average molecular weight of 31600 Da, melt index 2.0 g/10 min and density 952 kg/m$^3$), ), 1.7 wt. % stearamide (Croda, Crodamide S BE), 0.81% LDPE (melt index 1.0 g/10 min), 1.2 wt. % LDPE (melt index 20 g/10 min), 0.52 wt. % chlorinated paraffin CP70, 0.17 wt. % antimony trioxide, 0.8 wt. % aluminum powder, each by weight of the mixture.

A fine cellular tube was obtained with a foam density of 32.5, kg/m$^3$ and open cell content 22.2 % (Table 7).

The process parameters for the Examples 2 and 3 are presented in Tab.3. The melt pressure at the extruder and pressure at the head are given in Tab. 4.

TABLE 3

| Process parameters | | |
|---|---|---|
| | Example 2 | Example 3 |
| Feature | Parameter | |
| Temperature of feeding and melting zones (°C) | 170 | 170 |
| Temperature of gas injection zone (°C) | 160 | 160 |
| Temperature of mixing zones (°C) | 160 | 160 |
| Temperature of meltcooler (°C) | 110 | 112 |
| Temperature of static mixer (°C) | 110 | 112 |
| Temperature of head (°C) | 110 | 112 |
| Throughput (kg/h) | 70 | 70 |
| Gas injection (kg/h) | 8.6 | 8.6 |

TABLE 4

| Melt pressure before meltcooler and at extruder head | | |
|---|---|---|
| Example No. | Melt pressure (bar) | Head pressure (bar) |
| 2 | 95 | 68 |
| 3 | 101 | 62 |

Although a bit higher open cell content, thermal conductivity stays unchanged at the level of 0.0405 W/m·K.

This foam also passed service temperature measured at 120°C (Table 8).

Although HDPE is known to have poor melt strength and its ability to foam is limited [Handbook of Industrial Polyethylene and Technology: Definitive Guide to Manufacturing, Properties, Processing, Applications and Markets" by Mark Spalding, Ananda Chatterjee, 2017, Scrivener Publishing LLC], it was possible to perform extrusion.

The foam described above does not require an additional component to generate better melt strength. All properties typical for low density LDPE- based foam stay unchanged, however foam shows improved heat resistance.

Additional benefit of described composition is higher pressure generated by HDPE. It was possible to reduce thermal conductivity by reducing cell size.

## Example 4 (Reference Example)

In this reference example, HDPE with inappropriate characteristics was used.

A composition consisting of 81.7 wt. % LDPE (type Sabic 2601X1 with melt index of 0.65 g/10 min and density 926 kg/m$^3$), 15.0 wt. % HDPE 2 (with polydispersity of 12.7, weight average molecular weight of 320000 Da, number average molecular weight of 25200 Da, melt index 0.8 g/10 min and density 953 kg/m$^3$), 1.3 wt. % glycerol monostearate GMS (Croda, Atmer 1013), and 2.0 wt. % Remafin Silver, each by weight of the mixture, was extruded.

When considering the contents of the masterbatches, this may also be expressed as being a composition consisting of 81.7 wt. % LDPE (type Sabic 2601X1 with melt index of 0.65 g/10 min and density 926 kg/m$^3$), 15.0 wt. % HDPE 2 (with polydispersity of 12.7, weight average molecular weight of 320000 Da, number average molecular weight of 25200 Da, melt index 0.8 g/10 min and density 953 kg/m$^3$), 1.3 wt. % glycerol monostearate GMS (Croda, Atmer 1013), 0.8 wt. % aluminum powder, 1.2 wt. % LDPE (melt index 20 g/10 min).

The foam collapsed immediately after extrusion. A tube sample with very rough surface, uneven cell structure and very high foam density of 45.6 kg/m$^3$ was obtained. Open cell content increased up to 66.7% (Table 7).

## Example 5 (Reference Example)

The inventors of EP 2 164 893 B1 mention that polyethylene foam based on a blend comprising 97% by weight - 99.5% by weight low density polyethylene and 0.5% by weight - 3.0 % by weight high density polyethylene, a nucleating agent and a cell stabilizer is corrugation free. Maximum service temperature is not mentioned in the patent. Also, molecular structure of HDPE is not listed as a key property for foaming. In order to demonstrate that there is no infringement, an example from Sabic patent was repeated.

A composition consisting of 92.7 wt. % LDPE (type Sabic 2102 with melt index of 2.0 g/10 min and density 921 kg/m$^3$), 2.5 wt. % HDPE 3 (type Sabic B6246), 1.3 wt. % glycerol monostearate GMS (Croda, Atmer 1013), 1.5 wt. % MB44PB and 2.0 wt. % Remafin Silver, each by weight of the mixture, was extruded.

When considering the contents of the masterbatches, this may also be expressed as being a composition consisting of 92.7 wt. % LDPE (type Sabic 2102 with melt index of 2.0 g/10 min and density 921 kg/m$^3$), 2.5 wt. % HDPE 3 (type Sabic B6246), 1.3 wt. % glycerol monostearate GMS (Croda, Atmer 1013), 0.8 wt. % aluminum powder, 1.2 wt. % LDPE (melt index 20 g/10 min), 0.81 wt. % LDPE (melt index 1.0 g/10 min), 0.52 wt. % chlorinated paraffin CP70, 0.17 wt. % antimony trioxide, each by weight of the mixture.

A foamed tube having a foam density of 29.7 kg/m$^3$ was obtained. Open cell content increased to 24.5%. However, wall thickness and inner diameter of foam is comparable to the Comparative Example A which depicts good foaming ability of the recipe.

Sample failed during the measurement of maximum service temperature at 120 °C.

## Example 6 (Reference Example)

In this reference example, LDPE with non-preferred characteristics was used.

A composition consisting of 80.7. wt. % LDPE (type Sabic 2102 with melt index of 2.0 g/10 min and density 921 kg/m$^3$), 15 wt. % HDPE 1 (with polydispersity of 9.09. weight average molecular weight of 288000 Da. number average molecular weight of 31600 Da. melt index 2.0 g/10 min and density 952 kg/m$^3$), 1.3 wt. % glycerol monostearate GMS (Croda, Atmer 1013) and, 3 wt. % PE-Masterbatch TA35, each by weight of the mixture, was extruded. When considering the contents of the masterbatches, this may also be expressed as being a composition consisting of 80.7 wt. % LDPE 1 (type Sabic 2102 with melt index of 2.0 g/10 min and density 921 kg/m$^3$), 15 wt. % HDPE 1 (with polydispersity of 9.09. weight average molecular weight of 288000 Da. number average molecular weight of 31600 Da. melt index 2.0 g/10 min and density 952 kg/m$^3$), 1.3 wt. % glycerol monostearate GMS (Croda, Atmer 1013), 1.95 wt. % LDPE (melt index 20.0 g/10 min), 1.05 wt. % talc.

The extrusion process was stable and a produced foamed tube with uniform cell structure and a foam density about 33.5 kg/m$^3$ was obtained. However, open cell content increased significantly (Table 7) and cells are more coarse in comparison to Comparative Example A and Examples 1, 2, 3 (Table 10). The quality of foam is not satisfying due to the cell size and open cell content. It is believed that the low melting point and low density led to a higher amount of open cells and coarse cell structure.

The contents of the respective components in the above examples may be summarized in the following table:

| contents in wt.-% | A* | 1 | 2 | 3 | 4* | 5* | 6* |
|---|---|---|---|---|---|---|---|
| LDPE1* | 88.5 | | | | | 92.7 | 80.7 |
| LDPE2 | | 87.7 | 87.3 | 79.8 | 81.7 | | |
| LDPE3 | 1.2 | 1.2 | 1.2 | 1.2 | 1.2 | 1.2 | 1.95 |
| LDPE4 | 1.1 | 0.81 | 0.81 | 0.81 | | 0.81 | |
| EOC* | 6.0 | | | | | | |
| HDPE1 | | 7.5 | 7.5 | 15 | | | 15 |
| HDPE 2* | | | | | 15.0 | | |
| HDPE 3 | | | | | | 2.5 | |
| GMS | 1.5 | 1.3 | 1.7 | | 1.3 | 1.3 | 1.3 |
| Stearamide | | | | 1.7 | | | |
| Aluminum | 0.8 | 0.8 | 0.8 | 0.8 | 0.8 | 0.8 | |
| CP70 | 0.7 | 0.52 | 0.52 | 0.52 | | 0.52 | |
| Sb-oxide | 0.2 | 0.17 | 0.17 | 0.17 | | 0.17 | |
| Talc | | | | | | | 1.05 |

*LDPE1: type Sabic 2102, melt index of 2.0 g/10 min, density 921 kg/m$^3$, melting point 107°C*
*LDPE2: type Sabic 2601X1, melt index of 0.65 g/10 min and density 926 kg/m$^3$, melting point 114°C*
*LDPE3: melt index of 20 g/10 min, from the aluminum masterbatch or from the talc masterbatch*
*LDPE4: melt index of 1.0 g/10 min, from the masterbatch of chlorinated paraffin CP70 with antimony trioxide*
*EOC: ethylene-octene copolymer Sabic, Cohere 8102*
*HDPE 1: with polydispersity of 9.09, weight average molecular weight of 288000 Da, number average molecular weight of 31600 Da, melt index 2.0 g/10 min and density 952 kg/m$^3$*
*HOPE 2*: with polydispersity of 12.7, weight average molecular weight of 320000 Da, number average molecular weight of 25200 Da, melt index 0.8 g/10 min and density 953 kg/m$^3$*
*HDPE 3: type Sabic B6246, with polydispersity of 12.4, weight average molecular weight of 346000 Da, number average molecular weight of 27900 Da, melt flow index of 0.5 dg/10 min, density 962 kg/m$^3$.*
*CP70: chlorinated paraffin CP70, from masterbatch Produits Chemiques Lucette, MB44PB*
*Sb-oxide: antimony trioxide from masterbatch Produits Chemiques Lucette, MB44PB*
*Al powder: aluminum powder, from the aluminum masterbatch, Clariant, Remafin Silver*
*Talc: Granula, PE-Masterbatch TA 35*
*GMS: glycerol monostearate GMS, Croda, Atmer 1013*
*Stearamide: Croda, Crodamide S BE*

TABLE 5

| Process parameters | | | |
|---|---|---|---|
| | Example 4 | Example 5 | Example 6 |
| Feature | | | |
| Temperature of feeding and melting zones (°C) | 145-155 | 150 | 170-150 |
| Temperature of gas injection zone (°C) | 160 | 150 | 150 |
| Temperature of mixing and cooling zones (°C) | 140-115 | 135-110 | 140-115 |
| Temperature of meltcooler (°C) | 111 | 102 | 110 |
| Temperature of static mixer (°C) | 113 | 102 | 114 |
| Temperature of head (°C) | 113 | 102 | 114 |
| Throughput (kg/h) | 15 | 15 | 12 |
| Gas injection (kg/h) | 1.6 | 1.6 | 1.3 |

TABLE 6

| Melt pressure before meltcooler and at extruder head | | |
|---|---|---|
| Example No. | Melt pressure (bar) | Head pressure (bar) |
| 4 | 70 | 22 |
| 5 | 43 | 14 |
| 6 | 78 | 20 |

TABLE 7

| Characteristics of foam | | | | | | |
|---|---|---|---|---|---|---|
| Example No. | Open cell content (%) | Density (kg/m$^3$) | Wall thickness (mm) | Inner diameter (mm) | Surface quality | Cell structure |
| A | 12.8 | 29.0 | 10.6 | 23.0 | OK | Uniform, fine |
| 1 | 21.6 | 31.8 | 10.3 | 22.5 | OK | Uniform, fine |
| 2 | 16.2 | 33.0 | 9.0 | 24.5 | OK | Uniform, fine |
| 3 | 22.2 | 30.5 | 8.5 | 24.0 | OK | Uniform, fine |
| 4 | 66.7 | 45.6 | 10.5 | 18.5 | Rough surface | Not uniform, coarse |
| 5 | 24.5 | 29.7 | 10.0 | 23.0 | Slightly rough | Uniform |
| 6 | 47.3 | 33.5 | 10.4 | 24.0 | rough | Uniform, coarse |

TABLE 8

| Maximum service temperature (thermal stability) at 120°C | |
|---|---|
| Example No. | |
| A | Fail |
| 1 | Pass |
| 2 | Pass |
| 3 | Pass |
| 5 | Fail |

TABLE 9

| Thermal conductivity (W/m·K) | |
|---|---|
| Example No. | |
| A | 0.0400 |
| 1 | 0.0410 |
| 2 | 0.0386 |

(continued)

| | Thermal conductivity (W/m·K) |
|---|---|
| Example No. | |
| 3 | 0.0405 |
| 6 | 0.0538 |

TABLE 10

| | Cell size ($\mu$m) |
|---|---|
| Example No. | |
| A | 662 |
| 3 | 510 |

**Claims**

1. A foam obtainable by foaming a composition comprising Mixture M consisting of Polymer A and Polymer B, wherein the content of Mixture M, relative to the total weight of polymers in the composition, is at least 80 wt.-%, and wherein

   Polymer A is polyethylene with a density of 925 to 935 kg/m$^3$ and/or a melting point of 110°C or more, and Polymer B is polyethylene with a density in the range of from 940 to 980 kg/m$^3$ which furthermore has a number average molecular weight in the range of from 30000 Da and 35000 Da, and/or a polydispersity in the range of from 8 and 10,
   wherein Polymer A is present in Mixture M at 62.5 to 92.9% by weight, relative to the total weight of Mixture M.

2. The foam according to claim 1, wherein the polymers comprise, relative to the total weight of polymers in the composition, 82 wt.-% or more, preferably 84 wt.-% or more, more preferably 86 wt.-% or more, still more preferably 88 wt.-% or more, still even more preferably 90 wt.-% or more, or even 92 wt.-% or more, 94 wt.-% or more, 96 wt.-% or more of Mixture M.

3. The foam according to claim 1 or 2, wherein at least 99.8 wt.-%, preferably at least 99.9 wt.-%, more preferably 99.95 wt.-%, even more preferably 99.99 wt.-%, of the repeating units in Polymer A are repeating units derived from ethylene and/or at least 99 wt.-%, preferably at least 99.3 wt.-%, more preferably 99.6 wt.-%, even more preferably 99.8 wt.-%, of the repeating units in Polymer B are repeating units derived from ethylene.

4. The foam according to claim 1 or 2, wherein Polymer A is obtainable by polymerizing a monomer mixture comprising at least 99.8 wt.-%, preferably at least 99.9 wt.-%, more preferably 99.95 wt.-%, even more preferably 99.99 wt.-%, ethylene and/or Polymer B is obtainable by polymerizing a monomer mixture comprising at least 99 wt.-%, preferably at least 99.3 wt.-%, more preferably 99.6 wt.-%, even more preferably 99.8 wt.-%, ethylene.

5. The foam according to any of claims 1 to 4, wherein Polymer A is low-density polyethylene having a density in the range of from 925 to 935 kg/m$^3$ and Polymer B is high-density polyethylene with a density in the range of from 940 to 980 kg/m$^3$.

6. The foam according to any one of the preceding claims, wherein Polymer A fulfills one or more or all of the following requirements (i) to (iv):

   (i) a density in the range of from 925 to 930 kg/m$^3$;
   (ii) a melt flow index, measured at 190°C with a load of 2.16 kg, in the range of from 0.1 g/10 min to 22 g/10 min, preferably in the range of from 0.25 to 4 g/10 min, more preferably in the range of from 0.50 to 0.80 g/10 min, even more preferably in the range of from 0.60 to 0.70 g/10 min;
   (iii) a melting temperature in the range of from 110°C to 114°C, more preferably in the range of from 112°C to 114°C;
   (iv) a crystallization temperature in the range of from 96°C to 104 °C, preferably in the range of from 99°C to 104°C, more preferably in the range of from 102°C to 104°C.

7. The foam according to any of preceding claims, wherein Polymer B fulfills one or more, preferably all, of the following requirements (i) to (iv):

(i) a weight average molecular weight in the range of from 270000 Da to 325000 Da; preferably from 285000 to 300000.
(ii) a number average molecular weight in the range of from 30000 Da and 35000 Da; preferably 31500 to 33500.
(iii) a polydispersity in the range of from 8 and 10, preferably 9;
(iv) a melt flow index, measured at 190°C with a load of 2.16 kg, in the range of from 0.05 g/10 min to 20 g/10 min, preferably in the range of from 0.5 to 4.0 g/10 min, more preferably in the range of from 1.0 to 3.0 g/10 min.

8. The foam according to any one of the preceding claims, wherein Polymer B fulfills one or more, preferably all, of following requirements (v) to (vii):

(v) a density in the range of from 940 to 970 $kg/m^3$, preferably in the range of from 950 to 960 $kg/m^3$, more preferably in the range of from 950 to 955 $kg/m^3$;
(vi) a melting temperature in the range of from 125 to 140°C, preferably in the range of from 130 to 132°C;
(vii) a crystallinity content in the range of from 50 to 75%, preferably in the range of from 65 to 75%, more preferably in the range of from 68 to 71%.

9. The foam according to any one of the preceding claims, wherein the foam does not contain more than 0.05 wt.-% of copolymers of ethylene and methacrylic acid, preferably wherein the foam does not contain more than 0.05 wt.-% of ionomer(s).

10. The foam according to any one of the preceding claims, wherein

the content of closed cells is at least 70%, preferably at least 75%, 78%, 80%, 83%, 85%, 88% or even at least 90%, based on all cells in the foam, and/or
the ratio of closed cells to open cells is at least 2.3, preferably at least 3, more preferably at least 5, 6, 7, 8, 9, 10, 11, 12, 13, 14, 15, 16, 17, 18, 19 or even 20.

11. The foam according to any one of the preceding claims, wherein the additives comprise one or more nucleating agents, preferably selected from talc, calcium carbonate, calcium silicate, titanium oxide, barium sulfate, expandable graphite, clay, montmorillonite clay, polyhedral oligomeric silsesquioxane (POSS), natural or synthetic graphite, mixture(s) of sodium bicarbonate and citric acid, or an amide, an amine and/or an ester of a saturated or unsaturated aliphatic $C_{10-34}$ carboxylic acid preferably selected from ethylene bistearamide, ethylene bisbehenamide and hexametylene biscaproamine, wherein the nucleating agent is preferably present in an amount in the range of from 0.1 to 3 % by weight, more preferably in the range of from 0.5 to 1.5 % by weight, relative to the total weight of the composition.

12. The foam according to any one of the preceding claims, wherein the additives comprise one or more cell stabilizers preferably selected from glycerol monostearate, a mixture of glycerol monostearate and glycerol monopalmitate, and amides which are preferably selected from stearyl stearamide, stearyl erucamide, palmitamide and/or stearamide, wherein the cell stabilizer which is more preferably one or more selected from glycerol monostearate, stearyl stearamide and stearamide, wherein the cell stabilizer is preferably present in an amount in the range of from 0.1 to 2.5 % by weight, more preferably in the range of from 1.0 to 1.5 % by weight, relative to the total weight of the composition.

13. The foam according to any one of the preceding claims, wherein the foam is physically foamed.

14. The foam according to any one of the preceding claims, wherein

the foam has a lambda (λ) value below 0.050 W/m*K at 40°C, preferably below 0.045 W/m*K, more preferably below 0.035 W/m*K, even more preferably below 0.034, below 0.033, below 0.032, below 0.031 or even below 0.030 W/m*K, as measured according to DIN EN ISO 8497, and/or
the foam has a maximum service temperature higher than 90 °C, preferably higher than 100 °C, more preferably higher than 115 °C, even more preferably higher than 117°C or even higher than 120 °C, as measured according to EN 14707.

15. A thermal insulation tube, rod, profile or sheet comprising the foam according to any one of claims 1 to 14.

**Fig. 1**

**Fig. 2**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/304693 A1 (ITOI AKIHIRO [JP]) 20 October 2016 (2016-10-20) * paragraphs [0021] - [0022]; examples 1-5, 7-9; tables 1-2 * ----- | 1-15 | INV. C08J9/00 C08J9/12 |
| X | GB 1 595 106 A (HOECHST HOLLAND NV) 5 August 1981 (1981-08-05) * page 1, line 78 - page 2, line 5 * * example II * ----- | 1-15 | |

TECHNICAL FIELDS SEARCHED (IPC)

C08J

The present search report has been drawn up for all claims

| Place of search | Date of completion of the search | Examiner |
|---|---|---|
| The Hague | 10 December 2024 | Mayer, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 8397

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2024

| Patent document cited in search report | Publication date | Patent family member(s) | Publication date |
|---|---|---|---|
| US 2016304693 A1 | 20-10-2016 | CN 105764968 A | 13-07-2016 |
| | | EP 3072922 A1 | 28-09-2016 |
| | | JP 6547628 B2 | 24-07-2019 |
| | | JP WO2015076306 A1 | 16-03-2017 |
| | | MY 175462 A | 29-06-2020 |
| | | US 2016304693 A1 | 20-10-2016 |
| | | WO 2015076306 A1 | 28-05-2015 |
| GB 1595106 A | 05-08-1981 | NONE | |

For more details about this annex : see Official Journal of the European Patent Office, No. 12/82

## REFERENCES CITED IN THE DESCRIPTION

**Patent documents cited in the description**

- EP 3500620 A

- EP 2164893 B1

**Non-patent literature cited in the description**

- **MARK SPALDING** ; **ANANDA CHATTERJEE**. Handbook of Industrial Polyethylene and Technology: Definitive Guide to Manufacturing, Properties, Processing, Applications and Markets. Scrivener Publishing LLC, 2017
- **R. GEDRON**. Thermoplastic Foam Processing, Principles and Development. CRC Press, 2005
- **HAROLD F. GILES** ; **JOHN R. WAGNER** ; **ELDRIDGE M. MOUNT**. Extrusion - the Definitive Processing Guide and Handbook. William Andrew Publishing, 2005
- **S.T. LEE**. Foam Extrusion - Principles and Properties. CRC Press, 2000

- Blowing Agents and Foaming Processes 2013. Conference Proceeding. May 2013, 1-6
- **S. T LEE** ; **CHUL B. PARK**. Foam extrusion - Principles and Practice. CRC Press, 2014
- ACS Symposium Series, Polymer Foams. 1997
- **M.H. WAGNER** ; **V. SCHULZE** ; **A.GOTTFERT**. Rheotens mastercurves and drawability of polymer melts.. *Polym. Eng. Sci*, 1996, vol. 36, 925-935
- **ISMAEL SÁNCHEZ-CALDERÓN,** ; **VICTORIA BERNARDO** ; **DANIEL CUADRA-RODRÍGUEZ** ; **JUDITH MARTÍN-DE-LEÓN** ; **MIGUEL ANGEL RODRÍGUEZ-PÉREZ**. *Polymer*, 2022, vol. 261, 125397